# EUROPEAN PATENT SPECIFICATION

(11) **EP 4 669 832 B1**
(45) Date of publication and mention of the grant of the patent: **02.12.2026**
(21) Application number: 24705675.7
(22) Date of filing: 16.02.2024
(51) Int. Cl.: E21B 41/00, B09B 1/00, B65G 5/00

(54) **METHOD OF PERFORMING CARBON SEQUESTRATION BY MEANS OF BICRS**
VERFAHREN ZUR DURCHFÜHRUNG DER KOHLENSTOFFSEQUESTIERUNG MITTELS BICRS
PROCÉDÉ DE RÉALISATION DE SÉQUESTRATION DE CARBONE AU MOYEN DE BICRS

(30) Priority: 20.02.2023 NL 2034189
(43) Date of publication of application: 31.12.2025
(73) Proprietor: Carbon Alert B.V., 7552 CN Hengelo (NL)
(72) Inventor: VAN MERKSTEIJN, Jacobus Lambertus, 7552 CN Hengelo (NL)
(74) Representative: Arnold & Siedsma
(86) International application number: PCT/EP2024/054030
(87) International publication number: WO 2024/175503

(56) References cited:
- US-A1- 2021 355 791
- US-A1- 2022 105 464
- SANDALOW DAVID ET AL: "Biomass Carbon Removal and Storage (BiRCS) Roadmap", 2 October 2020 (2020-10-02), United States, XP093018921, Retrieved from the Internet <URL:https://www.osti.gov/servlets/purl/1763937> [retrieved on 20230808]

## Description

The invention relates to a method of performing carbon sequestration by means of BiCRS (Biomass with Carbon Removal and Storage), in particular by disposing a carbon containing material, such as a biological material (biomass), under a ground surface.

In carbon sequestration through BiCRS, a carbon-containing material is isolated form the carbon cycle, so as to reduce the amount of carbon in the cycle. BiRCS may be a (partial) solution to the rising levels of carbon dioxide in the atmosphere, which brings about several negative effects, the best-known example being that of climate change due to the greenhouse effect. It is widely known that plants absorb carbon dioxide, and fix the carbon in other molecules via the process of photosynthesis. Normally plants, which constitute biomass, decay over relatively short periods of time, thereby feeding back the carbon into the carbon cycle. By isolating plant material (or biomass in general), the return of carbon to the cycle may be prevented, thereby thus performing carbon-sequestration through BiRCS. This strategy may be monetized by selling carbon rights corresponding to the sequestrated amount of carbon.

Of course, carbon sequestration through BiRCS can be performed using any carbon containing material of non-fossil origin. In particular, biological material - i.e. biomass - preferably obtained from plants is considered.

One way of isolating material from the carbon cycle is to store it underground. One such way is known from US 2021/0355791 A1, which discloses a method and a system for sequestering carbon-containing materials in underground wells. An example method includes: obtaining a material comprising a carbon-containing liquid; optionally testing the material for compatibility with an underground well; optionally adjusting a property of the material to improve the compatibility; and providing the material for injection into the underground well.

Underground storage may however be energy intensive, time intensive, require a large capital investment, or be otherwise impractical and/or uneconomical. The invention aims to at least partially alleviate said disadvantages.

The aim is achieved by the method of the preamble, characterized by inserting one or more injection tubes having a longitudinal direction into the ground by moving said one or more injection tubes down into the ground in the longitudinal direction thereof. and then injecting the carbon containing material into the ground through the one or more injection tubes.

Injecting the material into the ground may be a relatively cost effective way, as it does not require moving a large amount of ground. Accordingly, it is relatively energy efficient and therefore brings about relatively little costs for e.g. fuel. Also, by injecting no digging needs to be performed, which limits the amount of heavy machinery needed.

The method may further comprise removing the one or more injection tubes in a direction opposite to the longitudinal direction.

By moving in the longitudinal direction of the tubes, a relatively small amount of ground needs to be disrupted. In particular, the surface of the ground is damaged relatively little.

To make sure the carbon containing material is isolated from the carbon cycle, it may be disposed at a suitable depth. For this purpose, the one or more injection tubes may be inserted into the ground for injection at a depth below the surface of larger than 0.8 m, preferably larger than 1.0 m, most preferably larger than 1.2 m.

The material may spread across a depth-region around the inserted depth of the tubes. The method may however comprise inserting the injection tubes so that the carbon containing matter remains below the depth of 0.8 m, 1.0 m or 1.2 m.

The method can be performed relatively efficiently if said depth is maximally 1.5 m, preferably maximally 1.3 m.

In particular, the one or more injection tubes are inserted for injection below a local ground water level. Accordingly, the injected material will be less susceptible to rotting, and therefore be removed from the carbon cycle longer or even permanently.

Return to the carbon cycle can also be at least partly avoided if the one or more injection tubes are inserted for injection below a local root penetration depth. Accordingly, roots can not reached the injected material and can therefore not absorb (part of) it.

It is particularly advantageous if the method comprises forcing the carbon containing material through the injection tube while it is solid at least upon starting the act of forcing.

It is noted methods exist that relate to injecting liquid materials into the ground, but to the best of the applicant's knowledge injecting solid materials has not been done before. Nevertheless, pumps exist that can move bulk material, such as granular carbon-containing material down the injection tubes. Such pumps are for instance used in supplying concrete to building sites. The invention thus stems in part from the realization that pumps normally used in the concrete-building business can be used to move solid particulate carbon containing material for carbon sequestration through BiRCS. The skilled person is readily able to select a solid material moving pump, for instance from the concrete pumping industry. A particularly suitable type of pump is a piston pump. Piston pumps may receive particulate solid material, and may at least partially liquefy the material by compressing it during a pumping stroke of the piston. Two pistons may be provided to operate alternatingly. In particular, a piston is provided for each of the one or more injection tubes.

As an example of a suitable pump, reference is made to KIP 42 or KIP 98 as marketed by the firm Klein GmbH, of Jettingen-Scheppach, Germany.

Depending on the resistance encountered during injection, the carbon containing material may be compressed and as a result liquify for at least a part. This may be advantageous, because a liquified fraction of the material may distribute relatively easily in subsurface ground layers.

Moreover, the at least partial liquefaction may remove the need for a processor upstream of the injection tubes, which would use further energy. Accordingly, pumping the material when it is still solid (at least at the beginning of pumping) is relatively energy efficient as well.

To facilitate inserting the injection tubes in the ground, the method may comprise creating a hole in the ground for each of the one or more injection tubes before inserting them into the ground, preferably by drilling. The holes may be of a size corresponding to that of the tubes, but may also be smaller or larger.

After removing the injection tubes, one or more holes may be left behind. To facilitate recovery of the ground surface and to prevent carbon returning to the cycle, the holes may be closed. In particular, the method may for this purpose comprise sealing or covering one or more holes left behind when the one or more injection tubes are removed.

In an embodiment of the method, it comprises disposing the carbon containing material underground in a field which is used to grow plants to be harvested for carbon sequestration through BiRCS, and/or comprising growing plants on a field used for performing the method, optionally comprising harvesting the plants for carbon sequestration at a later time.

Accordingly, the same surface area is used for growing plants and for storing the carbon containing material sub-surface. If the grown plants are used as carbon-containing material for sequestration later, preferably at the same site, the surface area is used particularly efficiently. Moreover, this reduces the amount of transport of material needed.

To promote monetization, the method may further comprise tracking an indicator for the amount of carbon contained in the carbon containing material disposed underground, such as a mass, volume, carbon contents, etc. of the carbon containing material.

Using the indicator, it may be determined how much carbon is removed from the cycle. This can in turn be used to provide a net negative carbon effect, which can be used to e.g. compensate for otherwise polluting endeavors. In particular, using the indicator carbon certificates may be generated.

Useful indicators are for instance the mass of material inserted into the ground, and the carbon content of the material.

To facilitate traceability of the sequestrated carbon, the method may comprise tracking a geographic location of the disposed carbon containing material. Tracking the location may enable generation of carbon certificates. Moreover, keeping a log of the storage location of subsurface carbon, preferably along with the insertion depth, may facilitate analyzing the efficacy of the sequestration method.

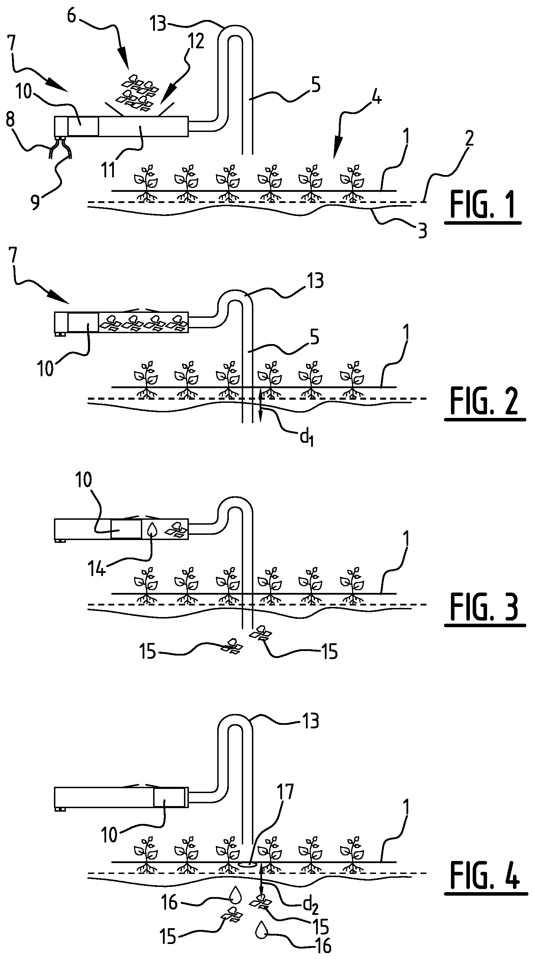

The invention will be further elucidated with reference to the figures, in which figures 1 - 4 schematically show different stages of a method of performing carbon sequestration through BiRCS. Like reference numerals refer to like elements across the figures. Repeated elements are not in all cases provided with their own reference numerals.

The figures show a ground surface 1 having plants 4 growing thereon. Although shown as a leaf-carrying plant 4, the plants 4 can be any suitable plant, including e.g. grass species. Roots of the plants 4 penetrate into the ground until a root penetration depth 2. Further, a ground water level 3 is indicated.

Disposition of carbon containing material 6 can be performed using a piston pump 7. The carbon containing material 6 is for example chopped plant 4 material, obtained from harvesting plants from the ground surface 1. The material 6 is inserted into a cylinder 11 of the pump 7 via a hopper 12. The piston pump 7 is hydraulically operated, in this case via hydraulic supply lines 8, 9. By inserting hydraulic fluid into the pump 7, a piston 10 is moved through the cylinder 11.

Before moving the piston 10, the hopper 12 is closed, so as to seal the space within the cylinder 11 which contains the material 6 (see figure 2). Next (figure 3) the piston 10 is forced using hydraulic fluid from one of the supply lines (not shown in figures 2 - 4) down the cylinder 11, thereby forcing material through a flexible hose 13 to an injection tube 5. Before injection, the tube has been moved down into the ground 1 (see figure 2 in comparison to figure 1). Accordingly, material 6 exits underground and is injected subsurface. In this case, particulate material 6 is fed to the pump 7, and some of the material remains solid 15 when injected into the ground. However, due to the high pressure in the pump 7, some of the material liquefies, for instance already in the pump 7, see liquid 14. The liquid 14 is also injected underground as injected liquid 16 (see figure 4). The injection tube 5 is removed from the ground after injection, leaving behind a hole 17. The hole 17 may then be covered or sealed.

According to the method as described herein, the injection tube is inserted a distance d₁ below the ground surface 1, that distance being for example more than 1.0 m. When inserted sufficiently deep, the injected material 15, 16 remains below the water level 3 and the root penetration depth 2, for instance at at least 1.0 m depth d₂.

Although the invention has been described above with reference to specific embodiments and examples, the invention is not limited thereto. In fact, the invention is also described by the attached claims.

## Claims

1. Method of performing carbon sequestration through BiRCS, by disposing a carbon containing material (6), such as a biological material, under a ground surface (1),
**characterized by**
inserting one or more injection tubes (5) having a longitudinal direction into the ground by moving one or more injection tubes it down into the ground in the longitudinal direction thereof, and then
injecting the carbon containing material (6) into the ground through the one or more injection tubes (5).

2. Method of performing carbon sequestration through BiRCS according to the previous claim, wherein the one or more injection tubes (5) are inserted into the ground for injection at a depth (d₁) below the surface (1) of larger than 0.8 m, preferably larger than 1.0 m, most preferably larger than 1.2 m.

3. Method of performing carbon sequestration through BiRCS according to the previous claim, wherein said depth (d₁) is maximally 1.5 m, preferably maximally 1.3 m.

4. Method of performing carbon sequestration through BiRCS according to any one or more of the preceding claims, wherein the one or more injection tubes (5) are inserted for injection below a local ground water level (3).

5. Method of performing carbon sequestration through BiRCS according to any one or more of the preceding claims, wherein the one or more injection tubes (5) are inserted for injection below a local root penetration depth (2).

6. Method of performing carbon sequestration through BiRCS according any one or more of the preceding claims, comprising forcing the carbon containing material (6) through the injection tube (5) while it is solid at least upon starting the act of forcing.

7. Method of performing carbon sequestration through BiRCS according to any one or more of the preceding claims, comprising creating a hole in the ground for each of the one or more injection tubes (5) before inserting them into the ground, preferably by drilling.

8. Method of performing carbon sequestration through BiRCS according to any one or more of the preceding claims, further comprising sealing or covering one or more holes (17) left behind when the one or more injection tubes (5) are removed.

9. Method of performing carbon sequestration through BiRCS according to any one or more of the preceding claims, comprising disposing the carbon containing material (6) underground in a field which is used to grow plants (4) to be harvested for carbon sequestration, and/or
comprising growing plants (4) on a field used for performing the method, optionally comprising harvesting the plants (4) for carbon sequestration at a later time.

10. Method of performing carbon sequestration through BiRCS according to any one or more of the preceding claims, further comprising tracking an indicator for the amount of carbon contained in the carbon containing material (6) disposed underground, such as a mass, volume, carbon contents, etc. of the carbon containing material (6).

11. Method of performing carbon sequestration through BiRCS according to the previous claim, further comprising tracking a geographic location of the disposed carbon containing material (6).

## Patentansprüche

1. Verfahren zum Durchführen von Kohlenstoffsequestrierung durch BiRCS, durch Einbringen eines kohlenstoffhaltigen Materials (6), wie einem biologischen Material, unter einer Bodenoberfläche (1),
**gekennzeichnet durch**
Einführen eines oder mehrerer Injektionsrohre (5), die eine Längsrichtung aufweisen, in den Boden durch Bewegen eines oder mehrerer Injektionsrohre nach unten in den Boden in die Längsrichtung davon, und dann
Injizieren des kohlenstoffhaltigen Materials (6) in den Boden durch das eine oder die mehreren Injektionsrohre (5).

2. Verfahren zum Durchführen von Kohlenstoffsequestrierung durch BiRCS nach dem vorstehenden Anspruch, wobei das eine oder die mehreren Injektionsrohre (5) für Injektion in einer Tiefe (d₁) unterhalb der Oberfläche (1) von mehr als 0,8 m, vorzugsweise mehr als 1,0 m, am meisten bevorzugt mehr als 1,2 m, in den Boden eingeführt werden.

3. Verfahren zum Durchführen von Kohlenstoffsequestrierung durch BiRCS nach dem vorstehenden Anspruch, wobei die Tiefe (d₁) maximal 1,5 m, vorzugsweise maximal 1,3 m, beträgt.

4. Verfahren zum Durchführen von Kohlenstoffsequestrierung durch BiRCS nach einem oder mehreren der vorstehenden Ansprüche, wobei das eine oder die mehreren Injektionsrohre (5) für Injektion unterhalb eines lokalen Grundwasserstands (3) eingeführt werden.

5. Verfahren zum Durchführen von Kohlenstoffsequestrierung durch BiRCS nach einem oder mehreren der vorstehenden Ansprüche, wobei das eine oder die mehreren Injektionsrohre (5) für Injektion unterhalb einer lokalen Wurzeleindringtiefe (2) eingeführt werden.

6. Verfahren zum Durchführen einer Kohlenstoffsequestrierung durch BiRCS nach einem oder mehreren der vorstehenden Ansprüche, umfassend ein Pressen des kohlenstoffhaltigen Materials (6) durch das Injektionsrohr (5), während es mindestens zu Beginn des Pressvorgangs fest ist.

7. Verfahren zum Durchführen von Kohlenstoffsequestrierung durch BiRCS nach einem oder mehreren der vorstehenden Ansprüche, umfassend ein Erzeugen eines Lochs in dem Boden für jedes des einen oder der mehreren Injektionsrohre (5), bevor sie in den Boden eingeführt werden, vorzugsweise durch Bohren.

8. Verfahren zum Durchführen von Kohlenstoffsequestrierung durch BiRCS nach einem oder mehreren der vorstehenden Ansprüche, ferner umfassend ein Abdichten oder Abdecken eines oder mehrerer Löcher (17), die zurückbleiben, wenn das eine oder die mehreren Injektionsrohre (5) entfernt werden.

9. Verfahren zum Durchführen von Kohlenstoffsequestrierung durch BiRCS nach einem oder mehreren der vorstehenden Ansprüche, umfassend das unterirdische Einbringen des kohlenstoffhaltigen Materials (6) in ein Feld, das verwendet wird, um Pflanzen (4), die für Kohlenstoffsequestrierung geerntet werden sollen, anzubauen, und/oder
umfassend das Anbauen von Pflanzen (4) auf einem Feld, das zum Durchführen des Verfahrens verwendet wird, gegebenenfalls umfassend das Ernten der Pflanzen (4) für Kohlenstoffsequestrierung zu einem späteren Zeitpunkt.

10. Verfahren zum Durchführen von Kohlenstoffsequestrierung durch BiRCS nach einem oder mehreren der vorstehenden Ansprüche, ferner umfassend ein Verfolgen eines Indikators für die Menge an Kohlenstoff, die in dem kohlenstoffhaltigen Material (6), das unterirdisch eingebracht ist, enthalten ist, wie eine Masse, ein Volumen, Kohlenstoffgehalte etc. des kohlenstoffhaltigen Materials (6).

11. Verfahren zum Durchführen von Kohlenstoffsequestrierung durch BiRCS nach dem vorstehenden Anspruch, ferner umfassend das Verfolgen eines geografischen Standorts des eingebrachten kohlenstoffhaltigen Materials (6).

## Revendications

1. Procédé de réalisation d'une séquestration de carbone par BiRCS, en disposant un matériau contenant du carbone (6), tel qu'un matériau biologique, sous une surface de sol (1),
**caractérisé par**
l'insertion d'un ou plusieurs tubes d'injection (5) ayant une direction longitudinale dans le sol en déplaçant un ou plusieurs tubes d'injection vers le bas dans le sol dans la direction longitudinale de ceux-ci, et ensuite
l'injection du matériau contenant du carbone (6) dans le sol par le ou les tubes d'injection (5).

2. Procédé de réalisation d'une séquestration de carbone par BiRCS selon la revendication précédente, dans lequel le ou les tubes d'injection (5) sont insérés dans le sol pour l'injection à une profondeur (d₁) sous la surface (1) supérieure à 0,8 m, de préférence supérieure à 1,0 m, le plus préférablement supérieure à 1,2 m.

3. Procédé de réalisation d'une séquestration de carbone par BiRCS selon la revendication précédente, dans lequel ladite profondeur (d₁) est au maximum de 1,5 m, de préférence au maximum de 1,3 m.

4. Procédé de réalisation d'une séquestration de carbone par BiRCS selon l'une quelconque ou plusieurs des revendications précédentes, dans lequel le ou les tubes d'injection (5) sont insérés pour l'injection en dessous d'un niveau de nappe phréatique locale (3).

5. Procédé de réalisation d'une séquestration de carbone par BiRCS selon l'une quelconque ou plusieurs des revendications précédentes, dans lequel le ou les tubes d'injection (5) sont insérés pour l'injection en dessous d'une profondeur de pénétration racinaire locale (2).

6. Procédé de réalisation d'une séquestration de carbone par BiRCS selon l'une quelconque ou plusieurs des revendications précédentes, comprenant le fait de forcer le matériau contenant du carbone (6) à travers le tube d'injection (5) alors qu'il est solide au moins au début de l'action de forçage.

7. Procédé de réalisation d'une séquestration de carbone par BiRCS selon l'une quelconque ou plusieurs des revendications précédentes, comprenant la création d'un trou dans le sol pour chacun des un ou plusieurs tubes d'injection (5) avant de les insérer dans le sol, de préférence par forage.

8. Procédé de réalisation d'une séquestration de carbone par BiRCS selon l'une quelconque ou plusieurs des revendications précédentes, comprenant en outre le scellement ou le recouvrement d'un ou plusieurs trous (17) laissés lorsque le ou les tubes d'injection (5) sont retirés.

9. Procédé de réalisation d'une séquestration de carbone par BiRCS selon l'une quelconque ou plusieurs des revendications précédentes, comprenant la disposition du matériau contenant du carbone (6) sous terre dans un champ qui est utilisé pour cultiver des plantes (4) devant être récoltées pour la séquestration de carbone, et/ou
comprenant la culture de plantes (4) sur un champ utilisé pour la réalisation du procédé, comprenant éventuellement la récolte des plantes (4) pour la séquestration du carbone à un moment ultérieur.

10. Procédé de réalisation d'une séquestration de carbone par BiRCS selon l'une quelconque ou plusieurs des revendications précédentes, comprenant en outre le suivi d'un indicateur de la quantité de carbone contenue dans le matériau contenant du carbone (6) disposé sous terre, tel qu'une masse, un volume, une teneur en carbone, etc. du matériau contenant du carbone (6).

11. Procédé de réalisation d'une séquestration de carbone par BiRCS selon la revendication précédente, comprenant en outre le suivi d'un emplacement géographique du matériau contenant du carbone (6) éliminé.
